# EUROPEAN PATENT APPLICATION

(11) **EP 2 224 320 A2**
(43) Date of publication of application: **01.09.2010**
(21) Application number: 10165016.6
(22) Date of filing: 27.11.2008
(51) Int. Cl.: G06F 3/045

(54) **Panel-type input device and electronic apparatus having the same**

(30) Priority: 27.11.2007 JP 2007306409
(62) Divisional of application: 08105879.4
(71) Applicant: Fujitsu Component Limited, Tokyo 141-8630 (JP)
(72) Inventor: Endo, Michiko, Shinagawa-ku Tokyo 141-8630 (JP)
(74) Representative: Finnie, Peter John

(57) **Abstract**

A panel-type input device (62) including a first electrode plate (16), a second electrode plate (22) and an intermediate layer (40) fixing the first electrode plate (16) to the second electrode plate (22). The first and second electrode plates (16,22) have a frame area (42) including a region in which the intermediate layer (40) is provided, and an input-permissible area (44) surrounded by the frame area (42). When the panel-type input device (62) is attached to an object with the first electrode plate (16) being laid on the object, the second electrode plate (22) is disposed in such a manner that an outer peripheral portion of the input-permissible area (44), adjoining the frame area (42), is exposed so as to permit an input operation. An attaching member (84) is formed from an adhesive layer (28) interposed between the front electrode plate (16) and a casing (66) to fix the panel-type input device (60) to the casing (66) wherein the frame area (42) and the input-permissible area (44) are entirely exposed outside the casing (66).

## Description

### Field of the Invention

The present invention relates to a panel-type input device. The present invention also relates to an electronic apparatus including a panel-type input device.

### Background to the Invention

A panel-type input device has been known as an input device of an electronic apparatus including a display unit, such as a personal computer, a personal digital assistant (PDA), an automatic teller machine (ATM), etc., which is operated to indicate two-dimensional coordinate data in the display unit by an operator pressing a desired point on a panel surface with his finger or a pen. In particular, a panel-type input device with a transparent structure, which can be mounted on a screen of a display unit, such as a liquid crystal display (LCD), a plasma display panel (PDP), a cathode ray tube (CRT), etc., has been widely used as a touch panel, and in recent years, has been mounted on a portable terminal unit having a mobile-phone function.

A resistive-type touch panel, as one example of a panel-type input device, includes a pair of transparent electrode plates, each having a transparent insulating substrate and a transparent electrical-conductive coat provided on one surface of the substrate, and has a configuration wherein the electrode plates are assembled to each other in such a relative arrangement that the conductive coats are opposed to and spaced from each other while permitting conductive contact therebetween (see, e.g., Japanese Unexamined Patent Publication (Kokai) No. 2005-190125 (JP-A-2005-190125)). The electrode plates are fixed to each other in a mutually superposed state by an electrical-insulating adhesive layer having a strip shape and provided along the outer edges of the opposed conductive coats. Within a region of each electrode plate, in which the adhesive layer is provided, a pair of positive and negative strip-shaped electrodes are formed to be connected to the conductive coat and disposed to be parallel to and spaced from each other (hereinafter referred generically to as a parallel electrode pair), and conductors are formed to be connected to the parallel electrode pair and patterned on the conductive coat with an insulating layer interposed between the conductors and the conductive coat.

Such a laminated structure (hereinafter referred generically as an intermediate layer), formed in the region in which the adhesive layer is provided, defines and ensures a spacing distance between the conductive coats of the electrode plates. The electrode plates are provided with a frame-shaped area (hereinafter referred to as a frame area) defined correspondingly to the region in which the intermediate layer is provided, and an input-permissible area surrounded by and defined inside the frame area. In the input-permissible area, a plurality of electrical-insulating dot spacers are provided in a suitably dispersed arrangement on the conductive coat of one of the electrode plates. The dot spacers serve to suppress an unintended concave flexure of the electrode plates due to, e.g., their own weight, so as to maintain a gap between the opposed conductive coats and, when either one of the electrode plates deforms under a pressing force, to allow local contact between the opposed conductive coats at a pressing point.

Generally, in a conventional resistive-type touch panel, the substrate of the electrode plate at a touching-operation side (or an upper side) is formed from a flexible resin film, and the substrate of the electrode plate at a display side (or a lower side) is formed, depending on applications, from a glass plate, a resin plate, a resin film, etc. The conductive coat is generally formed on the surface of each substrate by a coat-forming technology, such as vacuum deposition, sputtering, etc., using a metal oxide such as an indium tin oxide (ITO). In recent years, it has been proposed to form the conductive coat of the electrode plate of the resistive-type touch panel from an electrically conductive polymer (hereinafter referred to as a conducting polymer) (see, e.g., Japanese Unexamined Patent Publication (Kokai) No. 2005-182737 (JP-A-2005-182737), Japanese Unexamined Patent Publication (Kokai) No. 2005-146259 (JP-A-2005-146259). An electrically conductive coat formed from a conducting polymer has advantages that, compared to an ITO coat, the conducting polymer coat is excellent in impact resistance, writing durability, etc., and can be formed by a simple process such as coating or printing.

In a configuration where the upper-side electrode plate of the conventional resistive-type touch panel is formed from a resinous film substrate and an ITO coat, if an input operation is performed in an outer peripheral portion of the input-permissible area, adjoining the frame area, the upper electrode plate tends to be locally bent along the inner edge of the intermediate layer, which causes excessive stress in the ITO coat, and it is thus concerned that the ITO coat may be damaged by repeating the input operation and coordinate input precision (i.e., pressing-point detection precision) may be degraded. Conventionally, in order to eliminate the above concerns, in an electronic apparatus into which a resistive-type touch panel is installed, an attaching member (e.g., a casing of the electronic apparatus) used for attaching the touch panel to the display unit with the lower-side electrode plate being laid or superposed on the display unit, is formed in a frame shape to cover the frame area of the touch panel as well as the outer peripheral portion of the input-permissible area adjoining inside the frame area. When using such a frame-shaped attaching member, the input operation to the outer peripheral portion of the input-permissible area becomes physically difficult, so that it is possible to prevent the ITO coat from being damaged along the inner edge of the intermediate layer.

As described above, in the conventional resistive-type touch panel, in order to prevent the damage of the ITO coat caused along the inner edge of the intermediate layer, the frame-shaped attaching member is provided so as to preliminarily cover not only the frame area, but also the outer peripheral portion of the input-permissible area, adjoining inside the frame area, as an operation-impermissible area that does not permit the input operation, and to define an inside area, not covered by the attaching member, as a guaranteed active area that permits a stable input operation. On the other hand, in recent years, in a display unit such as an LCD, in order to expand a screen while suppressing increase in outer dimensions, a frame-shaped undisplayable region formed along the outer periphery of the screen tends to be narrowed or reduced.

In a touch panel, in order to correspond to the reduction of the undisplayable region in the display unit, it is also required to reduce an operation-impermissible area including the frame area as far as possible. In a conventional resistive-type touch panel, however, the reduction of the operation-impermissible area (i.e., the increase of the guaranteed active area) is restricted in view of a prevention of damage to the ITO coat. With the increased diversity of the design of electronic apparatuses, in place of the configuration wherein the frame-shaped attaching member (or the casing of the electronic apparatus) covers the frame area of the touch panel, a configuration wherein the touch panel constitutes a part of the case of the electronic apparatus may be adopted. In the latter configuration, the frame area of the touch panel is completely exposed, so that the conventional resistive-type touch panel having the ITO coat cannot be used, and a capacitive-type touch panel having a more expensive structure tends to be employed.

### Summary of the Invention

It is an object of the present invention to provide a panel-type input device having a resistive-type configuration, which can reduce an operation-impermissible area including a frame area and also can prevent a coordinate input precision from being degraded due to damage of a conductive coat.

It is another object of the present invention to provide an electronic apparatus including a panel-type input device having a resistive-type configuration, which is excellent in operability, and which can reduce an operation-impermissible area including a frame area and also can prevent a coordinate input precision from being degraded due to damage of a conductive coat of the panel-type input device.

To accomplish the above object, the present invention provides a panel-type input device comprising a first electrode plate including a first substrate and a first conductive coat provided on a surface of the first substrate; a second electrode plate including a second substrate and a second conductive coat provided on a surface of the second substrate, the second electrode plate being assembled with the first electrode plate in a relative arrangement such that the second conductive coat is opposed to and spaced from the first conductive coat while permitting a conductive contact therebetween; and an intermediate layer provided, in a strip shape, along outer edges of mutually opposed first and second conductive coats, the intermediate layer fixing the first electrode plate to the second electrode plate in the relative arrangement and ensuring a spacing distance between the first conductive coat and the second conductive coat; wherein the first electrode plate and the second electrode plate have a frame area including a region in which the intermediate layer is provided, and an input-permissible area surrounded by the frame area; wherein, when the panel-type input device is attached to an object with the first electrode plate being laid on the object, the second electrode plate is disposed in such a manner that an outer peripheral portion of the input-permissible area, adjoining the frame area, is exposed so as to permit an input operation; and wherein the second conductive coat of the second electrode plate is formed by using a conducting polymer.

According to the present invention, when the panel-type input device is attached to an object, it is possible to perform an input operation by pressing the second electrode plate with a pen or a finger, etc., in the outer peripheral portion of the input-permissible area, adjoining the frame area. In this connection, since the second conductive coat of the second electrode plate is formed by using the conducting polymer having superior properties, such as impact resistance, writing durability, etc., as compared to an ITO coat, even if the input operation is performed in the outer peripheral portion of the input-permissible area and excessive stress is thereby generated in the second conductive coat due to a local bending of the second electrode plate along the inner edge of the intermediate layer, it is possible to substantially eliminate concern about the damage of the second conductive coat by repeating the input operation and the degradation of coordinate input precision (i.e., pressing-point detection precision). As a result, in the present invention, the input-permissible area including the outer peripheral portion is capable of being entirely used as a guaranteed active area that permits a stable input operation for a long period.

Thus, according to the present invention, as compared to a conventional panel-type input device in which an electrode plate at an input-operation side is formed from a resinous film substrate and an ITO coat, the operation-impermissible area (including the frame area) that does not permit an input operation, can be reduced as far as possible (i.e., the guaranteed active area can be enlarged as much as possible), while preventing a coordinate input precision from being degraded due to damage of the conductive coat.

The panel-type input device may further include an attaching member attaching the panel-type input device to an object with the first electrode plate being laid on the object. In this arrangement, the attaching member may be disposed on an outer surface of the second substrate of the second electrode plate at a location where the attaching member does not overlap the input-permissible area, or alternatively the attaching member may not be disposed on an outer surface of the second substrate of the second electrode plate.

The panel-type input device may further include a plurality of dot spacers dispersedly arranged on the first conductive coat of the first electrode plate. In this arrangement, the number of the dot spacers per unit area in the outer peripheral portion of the input-permissible area may be less than the number of the dot spacers per unit area in a center portion of the input-permissible area other than the outer peripheral portion.

In the panel-type input device, the input-permissible area may include a coordinate input section for inputting coordinate data and a switch section for inputting an on-off switching command. In this arrangement, the intermediate layer may include a strip-shaped major portion provided along the outer edges of the first and second conductive coats and an extending portion extending from the major portion and isolating the coordinate input section from the switch section.

In the panel-type input device, the first electrode plate and the second electrode plate may be transparent.

Another aspect of the present invention provides an electronic apparatus comprising a display unit and a panel-type input device having a transparent structure and arranged to be laid on a screen of the display unit.

### Brief Description of the Drawings

The above and other objects, features and advantages of the present invention will become more apparent from the following description of preferred embodiments in connection with the accompanying drawings, wherein:
Fig. 1A is a sectional view schematically showing a panel-type input device according to a first embodiment of the present invention in a non-operated state, and enlarged in a thickness direction;
Fig. 1B is a sectional view schematically showing the panel-type input device of Fig. 1A in an operated state;
Fig. 2 is an exploded perspective view showing major components of the panel-type input device of Fig. 1;
Fig. 3 is an enlarged sectional view showing an intermediate layer of the panel-type input device of Fig. 1;
Fig. 4A is a perspective view schematically showing a sample used in an experiment for clarifying an effect obtained by the panel-type input device according to the present invention;
Fig. 4B is a front view schematically showing the sample of Fig. 4A;
Fig. 5 is an illustration showing a result of a first experiment conducted by using the sample of Fig. 4A;
Fig. 6 is an illustration showing a result of a second experiment conducted by using the sample of Fig. 4A;
Fig. 7 is an illustration showing a result of a third experiment conducted by using the sample of Fig. 4A;
Fig. 8 is a diagrammatic perspective view showing an electronic apparatus according to an embodiment of the present invention;
Fig. 9 is a sectional view taken along a line IX-IX of Fig. 8;
Fig. 10 is a sectional view showing an essential part of a modification of the electronic apparatus of Fig. 9;
Fig. 11 is a diagrammatic plan view showing an electronic apparatus according to another embodiment of the present invention, in which a panel-type input device according to a second embodiment of the present invention is installed;
Fig. 12 is a sectional view taken along a line XII-XII of Fig. 11; and
Fig. 13 is a sectional view taken along a line XIII-XIII of Fig. 11.

### Description of the Preferred Embodiment

The embodiments of the present invention are described below in detail, with reference to the accompanying drawings. In the drawings, the same or similar components are denoted by common reference numerals.

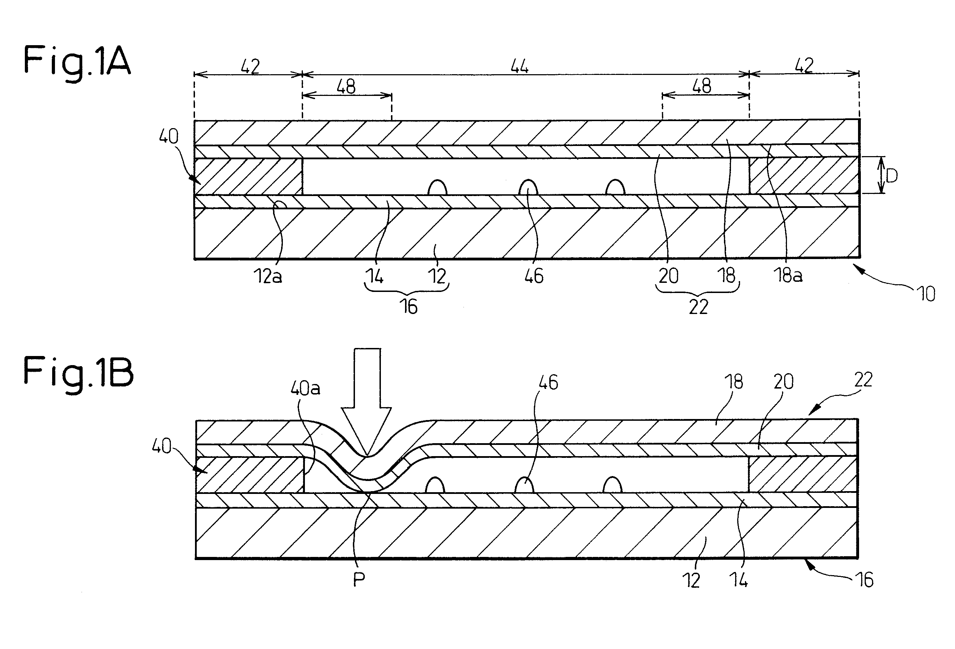

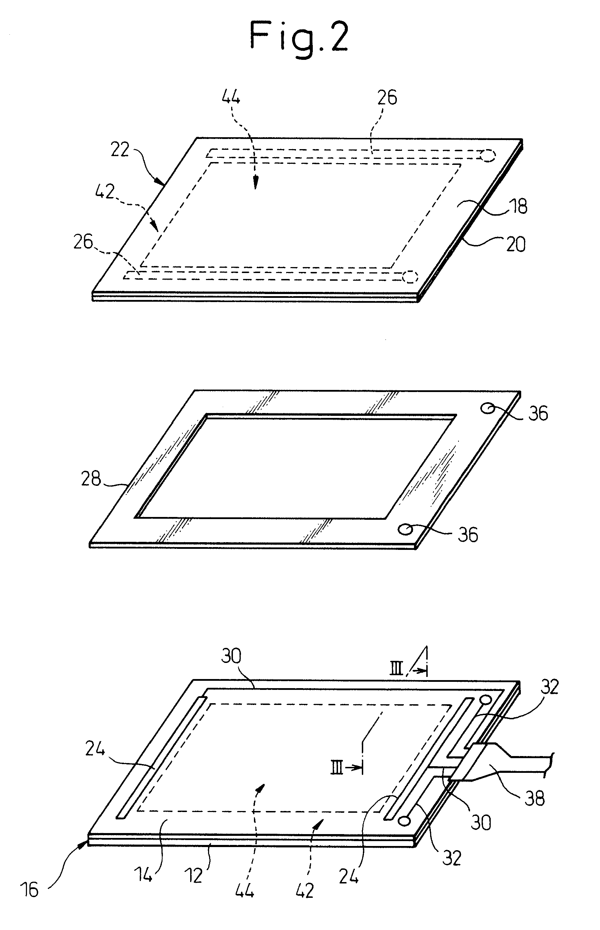

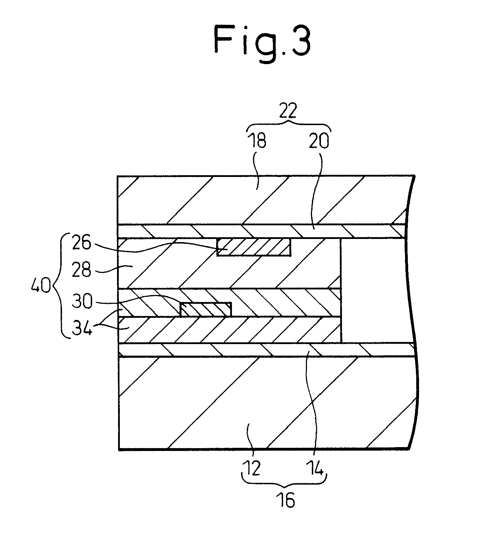

Referring to the drawings, Figs. 1A and 1B show, in schematic sectional views, essential components of a panel-type input device 10 according to a first embodiment of the present invention in non-operated and operated states, Fig. 2 shows, in an exploded schematic perspective view, the essential components of the panel-type input device 10, and Fig. 3 shows, in an enlarged sectional view, a part of the panel-type input device 10.

The panel-type input device 10 includes a first electrode plate 16 having a first electrical-insulating substrate 12 and a first electrical-conductive coat 14 provided on a surface 12a of the first substrate 12, a second electrode plate 22 having a second electrical-insulating substrate 18 and a second electrical-conductive coat 20 provided on a surface 18a of the second substrate 18 (Fig. 1A). The first substrate 12 and first conductive coat 14 of the first electrode plate 16 and the second substrate 18 and second conductive coat 20 of the second electrode plate 22 have generally rectangular profiles identical to each other as seen in a plan view (Fig. 2).

A pair of strip-shaped, positive and negative first electrodes (i.e., a first parallel electrode pair) 24 are provided on the first conductive coat 14 of the first electrode plate 16 at a location along a pair of opposing sides of the rectangular profile, and patterned and laminated directly on the first conductive coat 14 through, e.g., a screen printing, so as to be electrically connected to the first conductive coat 14 (Fig. 2). Similarly, a pair of strip-shaped, positive and negative second electrodes (i.e., a second parallel electrode pair) 26 are provided on the second conductive coat 20 of the second electrode plate 22 at a location along another pair of opposing sides of the rectangular profile, different from the location of the first parallel electrode pair 24, and patterned and laminated directly on the second conductive coat 20 through, e.g., a screen printing, so as to be electrically connected to the second conductive coat 20 (Fig. 2).

The first electrode plate 16 and the second electrode plate 22 are assembled with each other in a relative arrangement such that the first and second conductive coats 14, 20 are opposed to and spaced from each other while permitting a conductive contact therebetween, and are fixed to each other in a mutually superposed state by an electrical-insulating adhesive layer 28 (e.g., a double-sided adhesive tape) having a strip shape (a rectangular frame shape, in the illustrated embodiment) and provided along the outer edges of the opposed conductive coats 14, 20 (Figs. 2 and 3). In this assembly, the first and second conductive coats 14, 20 are disposed at positions where their respective profiles are substantially aligned with each other, and the first and second parallel electrode pairs 24, 26 are disposed at positions different or rotated from each other by 90 degrees (Fig. 2). The adhesive layer 28 is not limited to the continuous rectangular-frame form as illustrated, but may be formed from several separated strip elements.

In the illustrated embodiment, a pair of first conductors 30 individually connected to the first parallel electrode pair 24 and a pair of second conductors 32 individually connected to the second parallel electrode pair 26 are provided on the first conductive coat 14 of the first electrode plate 16 and patterned into predetermined profiles on the first conductive coat 14 through, e.g., screen printing, with an insulating layer 34 (shown as double resist layers in Fig. 3) interposed between the conductors and the conductive coat (Fig. 2). In this configuration, the second conductors 32 are individually connected to the corresponding second electrodes 26 via an electrical-conductive portion 36 formed as a part of the adhesive layer 28 in a state where the first and second electrode plates 16, 22 are assembled with each other in the aforementioned relative arrangement. The first and second conductors 30, 32 are collected at a predetermined location on the first electrode plate 16, and connected to a connector (e.g., a flexible printed circuit board) 38 constituting an interface with a not-shown control circuit.

The first and second parallel electrode pairs 24, 26, the first and second conductors 30, 32, as well as the insulating layer 34 are formed within a region in which the adhesive layer 28 is provided, and constitute an intermediate layer 40 extending in a strip shape (a rectangular frame shape, in the illustrated embodiment) along the outer edges of the first and second electrode plates 16, 22 (Fig. 3). The intermediate layer 40 functions as a spacer defining and ensuring a spacing distance D between the conductive coats 14, 20 of the first and second electrode plates 16, 22 (Figs. 1A and 1B).

The first and second electrode plates 16, 22 are provided with a frame-shaped area (i.e., a frame area) 42 defined correspondingly to the region in which the intermediate layer 40 is provided, and an input-permissible area 44 surrounded by and defined inside the frame area 42 (Figs. 1A to 2). In the input-permissible area 44, a plurality of electrical-insulating dot spacers 46 are provided in a suitably dispersed arrangement on the conductive coat 14, 20 (the first conductive coat 14, in the drawing) of either one of the first and second electrode plates 16, 22 (the first electrode plate 16, in the drawing) (Figs. 1A and 1B). The dot spacers 46 act to suppress an unintended concave flexure of the respective electrode plates 16, 22 due to, e.g., their own weight, so as to keep a gap between the opposed conductive coats 14, 20 and, when either one of the electrode plates 16, 22 deforms under a pressing force, to allow a local contact between the opposed conductive coats 14, 20 at a pressing point.

The panel-type input device 10 operates under the control of a control circuit (not shown) by applying a predetermined voltage alternately to the first parallel electrode pair 24 and the second parallel electrode pair 26, connected respectively to the first conductive coat 14 of the first electrode plate 16 and the second conductive coat 20 of the second electrode plate 22. In this state, when a desired position of the outer surface of, e.g., the second substrate 18 of the second electrode plate 22 is pressed with a pen or a finger, etc., the conductive coats 14, 20 come into conductive contact with each other at a pressing point P (Fig. 1B), and a divided voltage corresponding to the position of the pressing point P is outputted from one of the conductive coats 14, 20 to which a voltage is not applied. A processing section (not shown) provided in the control circuit measures the divided voltage alternately generated in the conductive coats 14, 20, and thereby detects a two-dimensional coordinate of the pressing point P. Such configuration has been conventionally known in a resistive-type touch panel.

The panel-type input device 10 according to the present invention has a characteristic configuration in which, when the panel-type input device 10 is attached to an object (e.g., a display unit) with the first electrode plate 16 being laid or superposed on the object, the second electrode plate 22 is disposed in such a manner that an outer peripheral portion 48 (Fig. 1) of the input-permissible area 44, adjoining the frame area 42, is exposed so as to permit an input operation. Further, the second conductive coat 20 of the second electrode plate 22 is formed by using an electrically conductive polymer (i.e., a conducting polymer). The property and specific material of the conducting polymer will be described later.

When the panel-type input device 10 having the above-described configuration is attached to the object such as a display unit, it is possible to perform an input operation by pressing the second electrode plate 22 with a pen or a finger, etc., in the outer peripheral portion 48 of the input-permissible area 44, adjoining the frame area 42. In this connection, since the second conductive coat 20 of the second electrode plate 22 is formed by using the conducting polymer having superior properties, such as impact resistance, writing durability, etc., as compared to an ITO coat, even if the input operation is performed in the outer peripheral portion 48 of the input-permissible area 44 (Fig. 1B) and excessive stress is thereby generated in the second conductive coat 20 due to a local bending of the second electrode plate 22 along the inner edge 40a of the intermediate layer 40, it is possible to substantially eliminate concern about the damage of the second conductive coat 20 by repeating the input operation and the degradation of coordinate input precision (i.e., pressing-point detection precision). As a result, in the panel-type input device 10, the input-permissible area 44 including the outer peripheral portion 48 is capable of being entirely used as a guaranteed active area that permits a stable input operation for a long period.

Thus, according to the panel-type input device 10, as compared to a conventional panel-type input device in which an electrode plate at an input-operation side is formed from a resinous film substrate and an ITO coat, the operation-impermissible area (including the frame area 42) that does not permit an input operation, can be reduced as far as possible (i.e., the guaranteed active area can be enlarged as much as possible), while preventing a coordinate input precision from being degraded due to damage of the second conductive coat 20.

In the panel-type input device 10, even if the outer peripheral portion 48 of the input-permissible area 44, adjoining throughout the frame area 42, is not entirely exposed (i.e., even if a part of the outer peripheral portion 48 is covered by another member), the exposed part of the outer peripheral portion 48 can be safely used as the guaranteed active area. The panel-type input device according to the present invention encompasses such a configuration. In this connection, it should be noted that the term "outer peripheral portion" in the present invention conceptually represents a portion in the input-permissible area of the panel-type input device, which adjoins the frame area, and the dimensions thereof are not numerically defined. For example, in a conventional resistive-type touch panel in which an operation-side electrode plate is formed from a resinous film substrate and an ITO coat, a portion that needs to be previously covered by a frame-shaped member so as to be defined as an operation-impermissible area, in order to prevent the ITO coat from being damaged along the inner edge of the frame area (or an intermediate layer), corresponds to the "outer peripheral portion" of the present invention.

The panel-type input device 10 may be configured as a touch panel having a transparent structure, which can be mounted to be superposed on a screen of a display unit, such as a liquid crystal display (LCD), a plasma display panel (PDP), a cathode ray tube (CRT), etc. Alternatively, the panel-type input device 10 may be configured as an opaque or translucent structure known as a pointing device.

The panel-type input device 10 configured as a transparent touch panel may have an exemplary configuration such that the first electrode plate 16 is used as a lower-side electrode plate disposed adjacent to the screen of a display unit, and the first substrate 12 thereof is formed from a transparent glass or resin plate or a transparent resin film. Also, the second electrode plate 22 may be used as an upper-side electrode plate subjected to a pressing operation by an operator, and the second substrate 18 thereof may be formed from a transparent resin film with high flexibility. Resinous materials suitable for the first and second substrates 12, 18 are polycarbonate, acryl, polyethylene terephthalate (PET), etc.

The first conductive coat 14 of the first electrode plate 16 may be formed from a transparent electrically conductive composition such as an ITO, and may be provided by, e.g., vacuum deposition, sputtering, etc., to coat the surface 12a of the first substrate 12. On the other hand, the second conductive coat 20 of the second electrode plate 22 may be formed from a conducting polymer having excellent transparency, and may be provided by, e.g., coating, printing, etc., to coat the surface 18a of the second substrate 18. Since the second conductive coat 20 of the second electrode plate 22, used as an upper-side conductive coat, is formed from the conducting polymer, it is possible to ensure essential properties required for a touch panel, such as writing durability, impact resistance, etc. Further, the first conductive coat 14 may also be formed from a conducting polymer similar to the second conductive coat 20.

One example of the conducting polymer that can be preferably used for the second conductive coat 20 of the panel-type input device 10 is a polythiophene-based conducting polymer as described in JP-A-2005-182737 and JP-A-2005-146259. In particular, in the case where the panel-type input device 10 is configured as a touch panel, the polythiophene-based polymer is preferred in excellent transparency. Other conducting polymers that can be used in the panel-type input device 10 are polyaniline, polypyrrole, polyethylene dioxythiophene (PEDOT), etc.

Thickness of the second conductive coat 20 is not particularly limited, but preferably is in the range of 0.01µm to 10µm, and more preferably is in the range of 0.1µm to 1µm. If the thickness is less than 0.01µm, electrical resistance of the second conductive coat 20 may become unstable, and if the thickness is more than 10µm, adhesiveness relative to the second substrate 18 may be degraded. Surface resistivity (pursuant to, e.g., JIS K6911) of the second conductive coat 20 made of a conducting polymer is not particularly limited, but e.g., is 4800Ω/□ (ohm/sq uare) or less, preferably is 2800Ω/□ or less, and more preferably is 1480Ω/□ or less. If the surface resistivity exceeds 4800Ω/□, input responsiveness may be impaired. It is desirable that the first conductive coat 14 made of an ITO has similar properties. Process of forming the second conductive coat 20 made of a conducting polymer is not particularly limited, but a coating process such as spin coating, roller coating, bar coating, dip coating, gravure coating, curtain coating, die coating, spray coating, doctor coating, kneader coating, etc., or a printing process such as screen printing, spray printing, ink-jet printing, relief printing, intaglio printing, planographic printing, etc., may be employed.

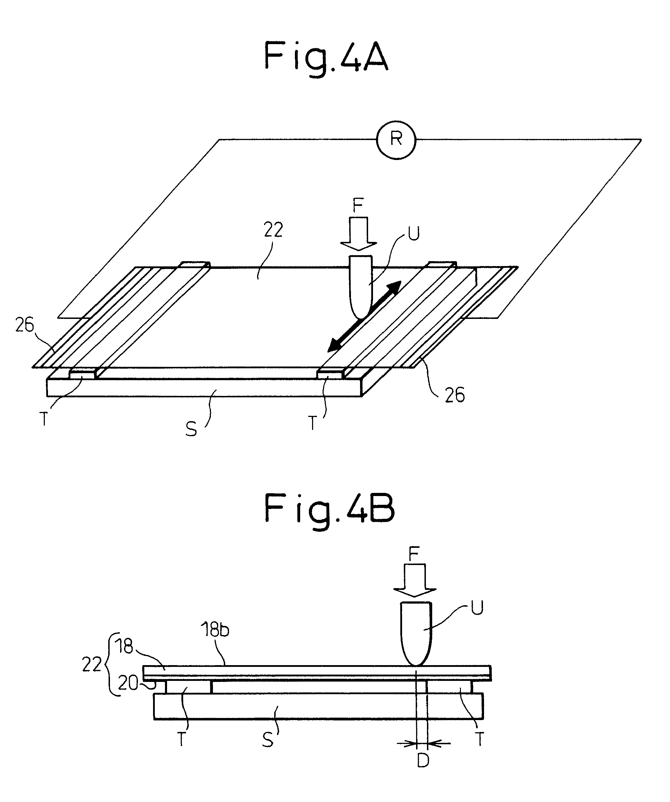

In order to further clarify the effect of the panel-type input device according to the present invention, several experiments were performed by the inventor of the present application, the contents and results of which will be described below with reference to Figs. 4A to 7.

### [Experiment 1]

A sample simulating the panel-type input device 10 was prepared in such a manner that a pair of ridges T were formed on the upper surface of a substrate S so as to be spaced from and parallel to each other (150µm height, 30mm spacing), and that a second electrode plate 22 configured by providing a second conductive coat 20 made of a polythiophene-based conducting polymer (160nm thickness) to coat a second substrate 18 (188µm thickness) formed from a PET film was securely placed on the top faces of the ridges T in a state where the second conductive coat 20 was opposed to the substrate S and second electrodes 26 were situated outside of the ridges T (Figs. 4A and 4B). For this sample, a pen U having a hemispherical tip with 0.8mm radius (made of polyacetal (POM)) was used, and the pen tip was moved and slid in a reciprocal motion (10,000 times) at a predetermined position on the outer surface 18b of the second substrate 18 of the second electrode plate 22 along the inner edge of one of the ridges T while applying a predetermined pressing force F (4.9N) to the second substrate 18. After the reciprocal sliding motion of the pen tip was finished, change in the resistance value R (Fig. 4A) of the second electrode plate 22 was measured. The pen-tip reciprocal sliding motions were performed at several positions spaced by different distances D from the ridge T (Fig. 4B), and the measurement of change in the resistance value R was performed for the respective pen-tip sliding motions.

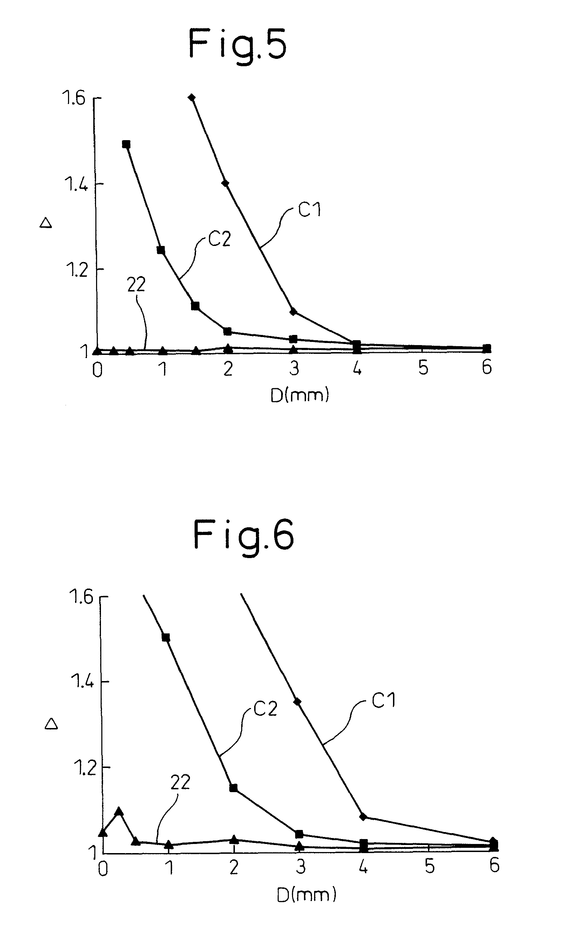

As comparative examples, an electrode plate C1 including a single-layer PET film substrate and an ITO coat on the PET substrate and an electrode plate C2 including a double-layer PET film substrate and an ITO coat on the PET substrate were prepared, and the aforementioned experimental steps were also performed to the electrode plates C1 and C2. Result of the experiment is shown in Fig. 5 (a vertical axis indicates the rate of change Δ in the resistance value R relative to an initial value).

As will be understood from Fig. 5, in the second electrode plate 22 including the second conductive coat 20 made of a conducting polymer, increase in the resistance value R was not observed even after the pen tip was slid in a reciprocal motion at and near the inner edge of the ridge T, and as a result, it was confirmed that the second conductive coat 20 was not damaged. In contrast, in the electrode plate C1, significant increase in the resistance value was observed in the case of the distance D from the ridge T being 4mm or less, and in the electrode plate C2, significant increase in the resistance value was observed in the case of the distance D from the ridge T being 2mm or less. It is supposed that the increases in the resistance value are resulted from damage in the ITO coat.

In view of the above result of the experiment, it can be understood that, when a conventional touch panel including an operating-side electrode plate formed from a PET film substrate and an ITO coat on the PET substrate is mounted to an electronic apparatus, an attaching member (e.g., a casing of the electronic apparatus) for attaching the touch panel to a screen of a display unit needs to be shaped so as to cover a frame area and an outer peripheral portion with about 4mm width in an input-permissible area, adjoining inside the frame area, of the touch panel. In contrast, according to the panel-type input device 10 by way of example, the input-permissible area 44 including the outer peripheral portion 48 with about 4mm width (Fig. 1A) is capable of being entirely used as a guaranteed active area, so that, as compared to the conventional touch panel, the guaranteed active area can be enlarged by about 4mm in vertical and horizontal directions, respectively.

### [Experiment 2]

The height of each ridge in the aforementioned sample was modified to 250µm, and an experiment was performed to the modified sample and the comparative examples, the steps of which were generally identical to those of the experiment 1. Result of the experiment is shown in Fig. 6 (a vertical axis indicates the rate of change Δ in the resistance value R relative to an initial value).

As will be understood from Fig. 6, even in the second electrode plate 22 including the second conductive coat 20 made of a conducting polymer, increase in the resistance value R was observed after the pen tip was slid in a reciprocal motion at a position spaced about 0.25mm from the ridge T. Therefore, it is desirable, for ensuring operational reliability over a long period, that the panel-type input device 10 by way of example is configured such that the thickness of the intermediate layer is less than 250µm. Even if the thickness of the intermediate layer is about 250µm, it is sufficient to construct an attaching member for attachment to an object (a display unit, etc.) so as to cover a part of the outer peripheral portion 48 (Fig. 1) of the input-permissible area 44 in a range of about 0.25mm from the intermediate layer 40. Therefore, it is still advantageous as compared to a conventional structure.

### [Experiment 3]

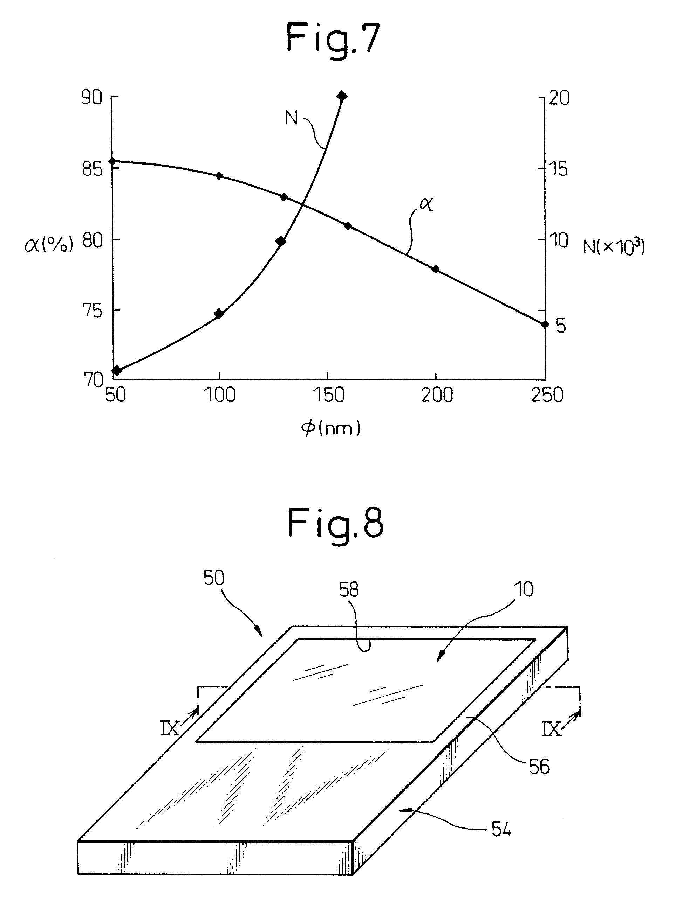

Samples having various different thicknesses Φ of the second conductive coats 20 of the second electrode plates 22, the configuration of each sample corresponding to the sample in the experiment 1, were prepared, and the lifetime N of each second conductive coat 20 and the total light transmittance α of each second electrode plate 22 were measured. In this connection, the lifetime N of the second conductive coat 20 was represented by the number of times of pen-tip reciprocal sliding motion at an instant when increase in the resistance value R of the second electrode plate 22 was observed due to the pen-tip reciprocal sliding motion performed at a position spaced by the distance D of 0.5mm from the ridge T by the experimental steps corresponding to the experiment 1. Result of the experiment is shown in Fig. 7.

As will be understood from Fig. 7, if the thickness Φ of the second conductive coat 20 is less than 100nm, the lifetime N is not likely to meet the requirement of lifetime of the second conductive coat 20 for a general touch panel (i.e., about 5,000 times of reciprocal sliding motion). On the other hand, if the thickness Φ of the second conductive coat 20 exceeds 250nm, the total light transmittance α is not likely to meet the requirement of total light transmittance of the second electrode plate 22 for a general touch panel (i.e., about 74%). Therefore, it is desirable that the second conductive coat 20 of the second electrode plate 22 of the panel-type input device 10 has a thickness Φ in the range of 100nm to 250nm.

### [Experiment 4]

A sample having a configuration generally corresponding to the sample in the experiment 1, in which a plurality of dot spacers (about 5µm height) were formed on the upper surface of the substrate S at regular intervals (2.5 mm) in a grid array through photolithographic technique, was prepared, and pressing forces F applied at various pressing points on the outer surface of the second electrode plate 22 by a pen tip and required to bring the second electrode plate 22 into contact with the substrate S were measured. As a result, it was found that a higher pressing force F is required in a region defined by the distance D of less than 5mm from the ridge T, as compared to a region defined by the distance D of 5mm or more.

This experimental result shows that it is desirable that, from the viewpoint of enabling an input operation to be performed by a uniform pressing force F throughout the input-permissible area 44, in the panel-type input device 10 by way of example, the number of dot spacers 46 per unit area in the outer peripheral portion 48 of the input-permissible area 44 (Fig. 1A) is less than the number of dot spacers 46 per unit area in the center portion of the input-permissible area 44 (i.e., the portion other than the outer peripheral portion 48). In the illustrated embodiment by way of example, no dot spacer 46 is provided in a region including the outer peripheral portion 48 (Fig. 1A) (i.e., a region within about 5mm distance from the intermediate layer 40), while the dot spacers 46 are provided only in the center portion of the input-permissible area 44 (i.e., the portion other than the outer peripheral portion 48).

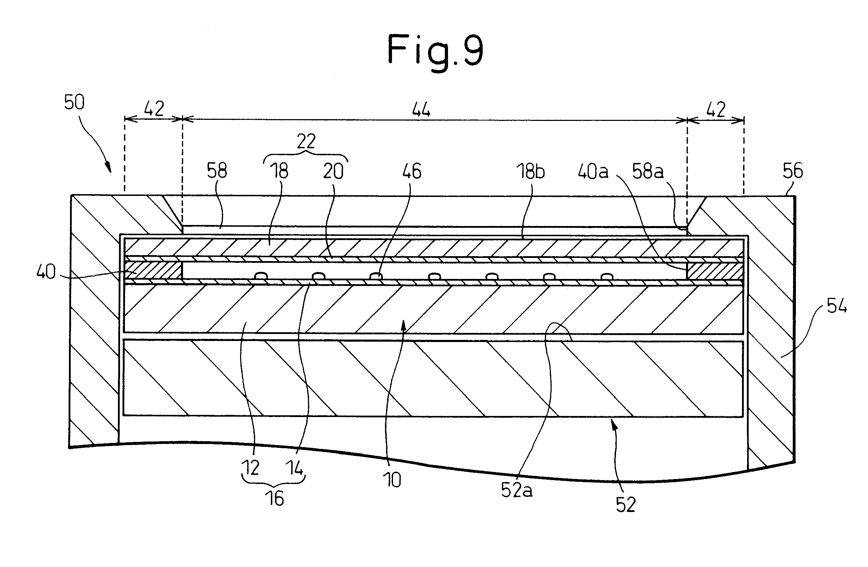

Now, the configuration of an electronic apparatus 50 according to an embodiment of the present invention, in which the panel-type input device 10 is installed, will be described with reference to Figs. 8 and 9.

The electronic apparatus 50 includes a display unit 52 such as an LCD, a PDP, a CRT, etc., the panel-type input device 10 as a touch panel arranged to be laid on the screen 52a of the display unit 52, and a casing 54 containing the display unit 52 and the panel-type input device 10 as well as other electronic components. The casing 54 is provided integrally or unitarily with a frame-shaped attaching member 56 used for attaching the panel-type input device 10 to the display unit 52 in such a manner that the first electrode plate 16 is laid or superposed on the screen 52a of the display unit 52. The second electrode plate 22 of the panel-type input device 10 is disposed so as to be exposed inside an opening 58 of the attaching member 56.

As clearly shown in Fig. 9, the attaching member 56 of the casing 54 is disposed on the outer surface 18b of the second substrate 18 of the second electrode plate 22 of the panel-type input device 10 at a location where the attaching member 56 does not overlap or cover the input-permissible area 44. Especially in the illustrated embodiment, the inner peripheral edge 58a of the opening 58 of the attaching member 56 is disposed at a position identical to the inner edge 40a of the intermediate layer 40 of the panel-type input device 10, so that the input-permissible area 44 of the panel-type input device 10 is entirely exposed inside the opening 58. Therefore, an input operation by pressing the second electrode plate 22 with a finger or a pen can be performed in the entire input-permissible area 44 of the panel-type input device 10.

In the electronic apparatus 50 having the above-described configuration, since the input-permissible area 44 of the panel-type input device 10 is entirely exposed inside the opening 58 of the attachment member 56 of the casing 54 and the aforementioned particular effects of the panel-type input device 10 can be obtained, the whole input-permissible area 44 including the outer peripheral portion 48 (Fig. 1A) can be used as a guaranteed active area that permits a stable input operation for a long period. Thus, according to the electronic apparatus 50, the operation-impermissible area (including the frame area 42) that does not permit an input operation, can be reduced as far as possible (i.e., the guaranteed active area can be enlarged as much as possible), while preventing a coordinate input precision from being degraded due to damage of the second conductive coat 20 of the panel-type input device 10. Therefore, using a relatively inexpensive resistive-type panel-type input device 10, it is possible to meet the requirement of reducing a frame-shaped undisplayable region (not shown) formed along the outer periphery of the screen 52a of the display unit 52, and to improve the operability of the panel-type input device 10.

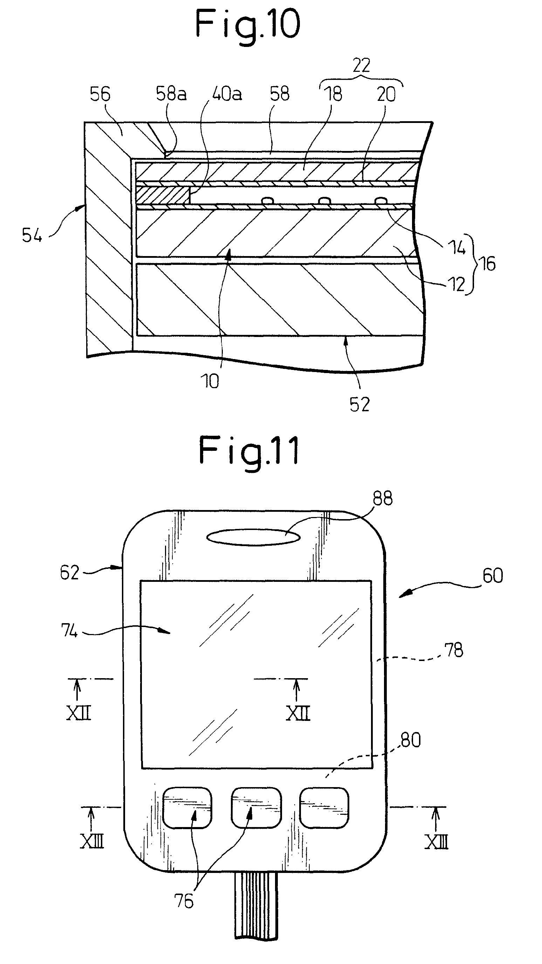

As shown in Fig. 10 as a modified embodiment, the attaching member 56 of the casing 54 may also be configured such that the peripheral edge 58a of the opening 58 is situated outside of the inner edge 40a of the intermediate layer 40 of the panel-type input device 10. According to this configuration, when an input operation is performed on the input-permissible area 44 (Fig. 9) of the panel-type input device 10, especially on the outer peripheral portion 48 thereof (Fig. 1A), the movement of the operator's hand is not impeded by the attaching member 56 of the casing 54, so that the operability of the panel-type input device 10 can be further improved without impairing the attaching function of the attaching member 56.

Figs. 11 to 13 show an electronic apparatus 60 according to another embodiment of the present invention, as well as a panel-type input device 62 according to a second embodiment of the present invention and installed in the electronic apparatus 60. The electronic apparatus 60 includes a thin or low-profile display unit 64 such as an LCD, a PDP, etc., the panel-type input device 62 as a touch panel arranged to be laid on the screen 64a of the display unit 64, and a casing 66 containing the display unit 64 and other electronic components and supporting the panel-type input device 62. The panel-type input device 62 has a configuration generally identical to the panel-type input device 10 shown in Figs. 1A and 1B, except for the configuration of the first substrate 12 of the first electrode plate 16 and the provision of a switch section in addition to the coordinate input section. Therefore, corresponding components are denoted by same reference numerals or symbols, and the explanations thereof are not repeated.

The panel-type input device 62 includes a first electrode plate 16 having a first substrate 12 and a first conductive coat 14, and a second electrode plate 22 having a second substrate 18 and a second conductive coat 20. The first substrate 12 is constructed from a resin film 68 coated with the first conductive coat 14 and a resin plate 72 fixed to the resin film 68 via an adhesive layer 70, and has a transparent structure as a whole. The panel-type input device 62 having the above configuration is referred to, e.g., as a film-film-plastic (FFP) type touch panel. In this configuration, it is preferred that the first conductive coat 14 is formed by using a conducting polymer identical to the second conductive coat 20.

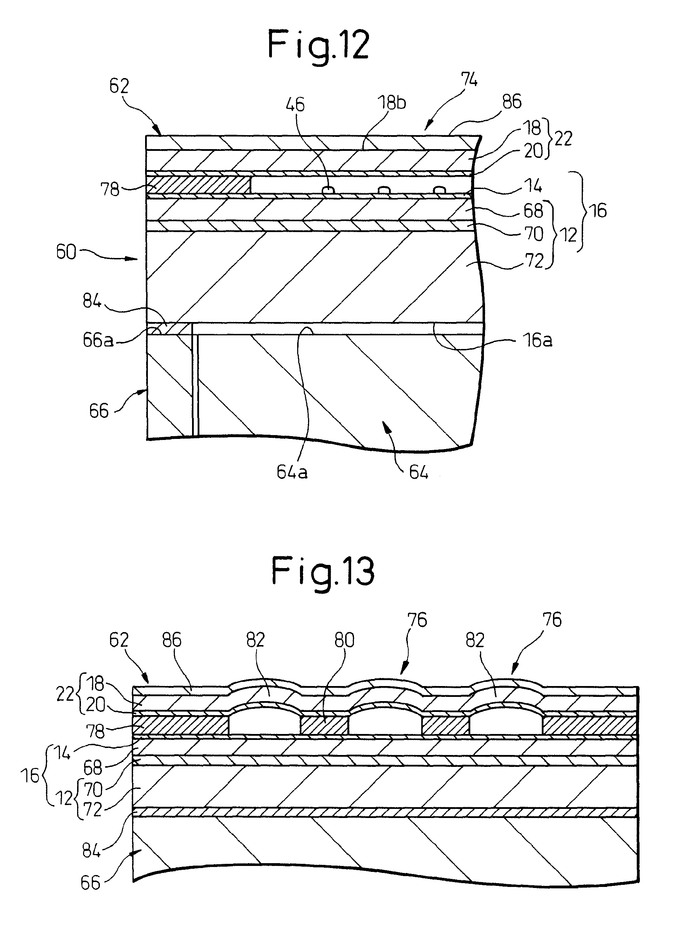

The panel-type input device 62 further includes an intermediate layer for fixing the first and second electrode plates 16, 22 to each other. The first and second electrode plates 16, 22 have a frame area including a region in which the intermediate layer is provided, and an input-permissible area surrounded by the frame area. The input-permissible area includes a coordinate input section 74 used for inputting coordinate data (corresponding to the input-permissible area 44 in the panel-type input device 10) and a switch section 76 used for inputting an on-off switching command. The number of coordinate input sections 74 and the number of switch section 76 are optionally selectable, but in the illustrated embodiment, a single coordinate input section 74 and three switch sections 76 are provided. In the switch section 76, no dot spacer 46 is provided on the first electrode plate 16 (Fig. 13).

The intermediate layer including an adhesive layer 28 (Fig. 13) has a strip-shaped major portion 78 (corresponding to the intermediate layer 40 of the panel-type input device 10) provided along the outer edges of the first and second conductive coats 14, 20, and an extending portion 80 extending from the major portion 78 and isolating the coordinate input section 74 from the switch section 76. In the illustrated embodiment, the extending portion 80 is also disposed between the switch sections 76 arranged side-by-side. The region in which the major portion 78 and extending portion 80 of the intermediate layer are provided, constitutes the frame area of the panel-type input device 62.

Since the panel-type input device 62 is configured such that the second conductive coat 20 of the second electrode plate 22 is formed from a conducting polymer, in the same manner as the aforementioned panel-type input device 10, the operation-impermissible area (including the frame area) that does not permit an input operation, can be reduced as far as possible (i.e., the guaranteed active area can be enlarged as much as possible), while preventing a coordinate input precision from being degraded due to damage of the second conductive coat 20. In the panel-type input device 62, it is possible to use common components so as to realize a coordinate-data input function and an on/off switching-command input function.

Further, in the panel-type input device 62, the second electrode plate 22 may be formed so as to locally bulge outward at the switch section 76 (Fig. 13). The raised portion 82 of the second electrode plate 22 may be provided by, e.g., a suitable forming process using a mold, performed after the second electrode plate 22 including the second conductive coat 20 made of a conducting polymer has been fabricated. In this process, it is possible to prevent the second conductive coat 20 made of a conducting polymer from being damaged. According to this configuration, a click feeling can be ensured for a pressing operation in the switch section 76.

The electronic apparatus 60 includes an attaching member 84 attaching the panel-type input device 62 to the display unit 64 with the first electrode plate 16 of the panel-type input device 62 being laid or superposed on the screen 64a of the display unit 64, the attaching member 84 being separated from the casing 66 (Fig. 12). The attaching member 84 may be formed from an adhesive layer such as a double-sided adhesive tape, and is interposed between the bottom face 16a of the first electrode plate 16 of the panel-type input device 62 and the top face 66a of the casing 66 receiving the display unit 64 to attach and fix the panel-type input device 62 to the casing 66.

Thus, in the electronic apparatus 60, the attaching member 84 is not disposed on the outer surface 18b of the second substrate 18 of the second electrode plate 22 of the panel -type input device 62, so that the input-permissible area (i.e., the coordinate input section 74 and the switch section 76) and the frame area (i.e., a region in which the major portion 78 and extending portion 80 of the intermediate layer are provided) are entirely exposed to the outside of the casing 66. Therefore, an input operation by pressing the second electrode plate 22 with a finger or a pen can be performed in the entire input-permissible area (i.e., the coordinate input section 74 and the switch section 76) of the panel-type input device 62.

In the electronic apparatus 60 having the above-described configuration, since the input-permissible area (the coordinate input section 74 and the switch section 76) of the panel-type input device 62 is entirely exposed outside the casing 66 and the aforementioned particular effects of the panel-type input device 62 can be obtained, the whole input-permissible area including the outer peripheral portion (e.g., the outer peripheral portion 48 of Fig. 1) adjoining the intermediate layer (the major portion 78 and the extending portion 80) can be used as a guaranteed active area that permits a stable input operation for a long period. Thus, according to the electronic apparatus 60, characteristic effects corresponding to those of the electronic apparatus 50 can be obtained. Further, in the electronic apparatus 60, when an input operation is performed on the input-permissible area (the coordinate input section 74 and the switch section 76) of the panel-type input device 62, especially on the outer peripheral portion thereof, the movement of the operator's hand is not impeded by any parts, so that the operability of the panel-type input device 62 can be further improved without impairing the attaching function of the attaching member 84.

The electronic apparatus 60 has a configuration wherein the panel-type input device 62 acts an integral part of the casing 66 so as to contain the display unit 64 and the other electronic components, and thus can be configured as, e.g., a portable terminal unit having a mobile-phone function. In this case, the panel-type input device 62 may advantageously include a cover film 86 with a hard coat for protecting the outer surface 18b of the second substrate 18, the cover film 86 being adhered to the entire outer surface 18b of the second substrate 18 (Figs. 12 and 13).

The panel-type input device 62 may be provided with a through hole 88 at a desired position within the frame area but outside the first and second parallel electrode pair 24, 26 (Fig. 2), so that an accessory unit such as a microphone, a speaker, a camera lens, etc., is arranged in association with the through hole 88 (Fig. 11). The through hole 88 may be formed by, e.g., punching the first and second electrode plates 16, 22 assembled with each other in a proper relative arrangement by using a press machine. In this connection, when both of the first and second conductive coats 14, 20 of the first and second electrode plates 16, 22 are formed from a conducting polymer, it is possible to surely prevent a crack from generating in the first and the second conductive coats 14, 20 at the time of punching.

The electronic apparatus 50, 60 as described above is configured such that the intermediate layer 40 or the major portion 78 and extending portion 80 thereof is at least partially visible from the outside of the second substrate 18 through the transparent second electrode plate 22 of the panel-type input device 10, 62. Thus, when the intermediate layer 40 or the major portion 78 and extending portion 80 thereof is configured to include a light-interrupting adhesive layer 28, it is possible to highlight a boundary between the frame area 42 and the input-permissible area 44, and to improve the visibility of the screen 52a, 64a of the display unit 52, 64 through the input-permissible area 44. In the electronic apparatus 60, a portion of the back surface of the hard-coated cover film 86, corresponding to the frame area 42, may be provided with a darkly-colored printing or coating, so that a boundary between the frame area 42 and the input-permissible area 44 can also be highlighted.

The attaching member 56, 84 of the electronic apparatus 50, 60 may be provided as an essential component of the panel-type input device 10, 62. For example, the panel-type input device 10 may include, as an essential component thereof, an attaching member 56 for attaching the panel-type input device 10 to an object (e.g., a display unit 52) with the first electrode plate 16 being laid or superposed on the object, in which the attaching member 56 is formed as a frame-shaped member separated from the casing 54. In this case, the attaching member 56 is disposed on the outer surface 18b of the second substrate 18 of the second electrode plate 22 at a location where the attaching member 56 does not overlap the input-permissible area 44. The panel-type input device 62 may include, as an essential component thereof, an attaching member 84 for attaching the panel-type input device 62 to an object (e.g., a display unit 64) with the first electrode plate 16 being laid or superposed on the object. In this case, the attaching member 84 is not disposed on the outer surface 18b of the second substrate 18 of the second electrode plate 22.

In either configuration, the object to which the panel-type input device 10, 62 is attached, is not limited to the display unit 52, 64. Especially, in the case where the panel-type input device 10, 62 has an opaque or translucent structure known as a pointing device, the attaching member 56, 84 can be used for attaching the panel-type input device 10, 62 to an object other than the display unit 52, 64.

While the invention has been described with reference to specific preferred embodiments, it will be understood by those skilled in the art that various changes and modifications may be made thereto without departing from the scope of the following claims.

## Claims

1. An electronic apparatus (60) comprising:
a display unit (64) having a screen (64a);
a panel-type input device (62) arranged to be laid on said screen (64a) of said display unit (64);
a casing (66) containing said display unit (64) and supporting said panel-type input device (62); and
an attaching member (84) attaching said panel-type input device (62) to said display unit (64);
said panel-type input device (62) comprising:
a first transparent electrode plate (16) including a first substrate (12) and a fist conductive coat (14) provided on a surface of said first substrate (12), said first transparent electrode plate (16) being laid on said screen (64a) of said display unit (64);
a second transparent electrode plate (22) including a second substrate (18) and a second conductive coat (20) provided on a surface of said second substrate (18), said second transparent electrode plate (22) being assembled with said first transparent electrode plate (16) in a relative arrangement such that said second conductive coat (20) is opposed to and spaced from said first conductive coat (14) while permitting a conductive contact therebetween; and
an intermediate layer (40) provided, in a strip shape, along outer edges of mutually opposed first and second conductive coats (14,20), said intermediate layer (40) fixing said first transparent electrode plate (16) to said second transparent electrode plate (22) in said relative arrangement and ensuring a spacing distance between said first conductive coat (14) and said second conductive coat (20);
wherein said first transparent electrode plate (16) and said second transparent electrode plate (22) have a frame area (42) including a region in which said intermediate layer (40) is provided, and an input-permissible area (44) surrounded by said frame area (42);
wherein said second transparent electrode plate (22) is disposed in such a manner that an outer peripheral portion of said input-permissible area (41), adjoining said frame area (42), is exposed so as to permit an input operation;
wherein said second conductive coat (20) of said second transparent electrode plate (12) is formed by using a conducting polymer;
wherein said attaching member (84) is formed from an adhesive layer (28) interposed between a bottom face of said first transparent electrode plate (16) of said panel-type input device (62) and a top face of said casing (66) to fix said panel-type input device (62) to said casing (66); and
wherein said frame area (42) and said input-permissible area (44) of said panel-type input device (62) are entirely exposed outside said casing (66).

2. An electronic apparatus (60) as set forth in claim 1, wherein said input-permissible area (44) of said panel-type input device (62) includes a coordinate input section (74) for inputting coordinate data and a switch section (76) for inputting an on-off switching command; and wherein said intermediate layer (40) of said panel-type input device (62) includes a strip-shaped major portion (78) provided along said outer edges of said first and second conductive coats (14,20) and an extending portion (80) extending from said major portion (78) and isolating said coordinate input section (74) from said switch section (76).

3. An electronic apparatus (60) as set forth in claim 2, wherein said second electrode plate (22) bulges outward at said switch section (76).
